# EUROPÄISCHE PATENTSCHRIFT

(11) **EP 0 681 866 B1**
(45) Veröffentlichungstag und Bekanntmachung des Hinweises auf die Patenterteilung: **20.10.1999**
(21) Anmeldenummer: 95104167.2
(22) Anmeldetag: 22.03.1995
(51) Int. Cl.: B01J 19/00, B01J 19/14

(54) **Verfahren zum Inertisieren von Reaktoren**
Process for rendering reactors inert
Procédé pour l'inertisation de réacteurs

(30) Priorität: 15.04.1994 DE 4413074
(43) Veröffentlichungstag der Anmeldung: 15.11.1995
(73) Patentinhaber: MESSER GRIESHEIM GMBH, 60547 Frankfurt (DE)
(72) Erfinder: Lenhard-Lubeseder, Ulrich, D-47807 Krefeld (DE); Löhning, Jörg, D-47198 Duisburg (DE); Lürken, Franz, Dr., D-47906 Kempen (DE)

(56) Entgegenhaltungen:
- EP-A- 0 396 013
- DE-A- 2 744 767
- FR-A- 2 410 504

## Beschreibung

Die Erfindung betrifft ein Verfahren zum Inertisieren von brennbare Substanzen enthaltenden, zumindest zeitweise geöffneten Reaktoren nach dem Oberbegriff des Anspruches 1.

Bei chemischen Herstellprozessen in Reaktoren, in welchen sich brennbare Substanzen befinden, wird das Reaktorinnere inertisiert. Wenn der Reaktor geöffnet wird, um beispielsweise Feststoffe einzufüllen, kann die sauerstoffhaltige Außenluft in den Reaktor eindringen. Um dieses Eindringen von Sauerstoff zu vermeiden bzw. um seine Folgen abzufangen, wird nach verschiedenen Verfahren vorgegangen.

Im einfachsten Fall ignoriert man die Gefahrenmomente, die während des Öffnens und Füllens gegeben sind und führt nach Schließen des Reaktordeckels gegebenenfalls eine erneute Inertisierung durch. Wirksamer ist es, während der Dauer des Öffnungs- und Füllvorgangs Inertgas zuzuführen. Hierzu verwendet man mitunter auch sogenannte Inertgasschleusen. Die Inertgaszufuhr bewirkt zumeist einen Gasaustritt aus der Füllöffnung, der einen Lufteintritt verhindert. Gegebenenfalls wird auch hierbei nach Schließen des Deckels nachinertisiert. Am sichersten ist es, kontinuierlich den Sauerstoffrestgehalt im Reaktor zu messen und hiermit die Zugabe von Inertgas durch die vorhandene Inertisierungsleitung auszulösen.

Alle diese Verfahren haben Nachteile. So ist die erstgenannte Vorgehensweise sicherheitstechnisch bedenklich. Bei den beiden anderen Vorgehensweisen werden erhebliche Mengen brennbarer Dämpfe ausgetragen und bilden ein Explosions- oder ein Gesundheitsrisiko für das handhabende Personal. Außerdem kann feinkörniges Schüttgut entgegen der Fallrichtung aufgewirbelt und ausgetragen werden. Auch dies kann ein Sicherheits- oder Gesundheitsrisiko sein, zumindest wird hierdurch aber in unerwünschter Weise die Produktionshalle verunreinigt. Außerdem stellt der Austrag der Dämpfe und Stäube einen wirtschaftlichen Verlust dar. Die Messung des Sauerstoffes mit der damit verbundenen Regelung der Inertgaszufuhr ist zwar hoch wirksam und beinhaltet kein Sicherheitsrisiko, sie ist jedoch so teuer, daß viele Betreiberfirmen auf deren Anschaffung verzichten.

Der Erfindung liegt die Aufgabe zugrunde, ein Verfahren zum Inertisieren von brennbare Substanzen enthaltenden, zumindest zeitweise geöffneten Reaktoren zu schaffen, welches sicherheitstechnisch unbedenklich ist, ohne Verlust von Betriebsstoffen auskommt und keine hohen Anschaffungskosten erfordert. Ausgehend von dem im Oberbegriff des Anspruches 1 berücksichtigten Stand der Technik ist diese Aufgabe erfindungsgemäß gelöst, mit den im kennzeichnenden Teil des Anspruches 1 angegebenen Merkmalen.

Vorteilhafte Weiterbildungen der Erfindung sind in den Unteransprüchen angegeben.

Die Erfindung beruht auf der überraschenden Erkenntnis, daß sich bei Einsatz einer Schleuse in dem Reaktor im geöffneten Zustand ein konstanter Restsauerstoffgehalt einstellt, der ausschließlich vom Differenzwert zwischen dem durch die Inertgasschleuse zugeführten Inertgasstrom und dem konstant abgezogenen Kopfraumgasstrom abhängt. Dieser Differenzwert ist für den jeweiligen Reaktor und die jeweiligen Produktionsfaktoren spezifisch und wird in Vorversuchen ermittelt. Es erübrigt sich somit jegliche Messung des Sauerstoffgehaltes im Reaktor und jegliche daraus resultierende Regelung der Inertgaszufuhr für die Produktion. Dadurch wird das Verfahren sehr kostengünstig. Die Inertgase müssen nicht rein sein, also beispielsweise reiner Stickstoff oder reines Kohlendioxid, sondern können auch geringe Mengen anderer Komponenten enthalten, sogar einige Prozent Sauerstoff. Weitere Komponenten können vor allem Argon und Wasser sein, sowie weitere Spurenstoffe in Konzentrationen unter 0,1 Vol.-%. Für das Inertgas genügen beispielsweise Stickstoff-Reinheiten von 95 bis 99,9 Vol.-%. Das Inertgas kann somit simultan vor Ort, beispielsweise durch Membrantrennverfahren oder Druckwechseladsorptionsverfahren hergestellt werden. Eine weitere bevorzugte Verfahrensweise besteht darin, das Inertgas aus verdampftem flüssigen Stickstoff zu gewinnen, welcher zur kryotechnischen Reinigung des aus dem Reaktor abgezogenen Kopfraumgases dient. Diese kryotechnische Reinigung besteht aus dem Auskondensieren oder Ausfrieren von im Kopfraumgas enthaltenden Schadstoffen an mit flüssigem Stickstoff gekühlten Oberflächen.

Das erfindungsgemäße Verfahren ermöglicht somit die sichere Aufrechterhaltung einer zunächst herbeigeführten Grundinertisierung bei Zugabe von Material durch die Behälteröffnung. Es hat wirtschaftliche Vorteile gegenüber herkömmlichen Inertisierungskonzepten, da auf eine Sauerstoffmeß- und -Regeltechnik verzichtet werden kann sowie Verluste an Inertgas und Produktionsstoffen weitgehend vermieden werden und die Produktionsanlage durch Staubbildung nicht verschmutzt wird.

Im Sinne der Erfindung sind unter dem Begriff Reaktor alle geeigneten Behälter wie beispielsweise Mischer, Silos sowie Einrichtungen wie Shredder und Mahlanlagen zu verstehen.

Die Erfindung wird anhand der beigefügten Zeichnungen erläutert.

Es zeigen:
- Fig. 1: eine Vorrichtung zur Durchführung des erfindungsgemäßen Verfahrens in schematischer Form,
- Fig. 2: die in Figur 1 dargestellte Inertgasschleuse in vergrößerter Ausführung,
- Fig. 3: die Darstellung von praktischen Betriebsergebnissen in grafischer Form.

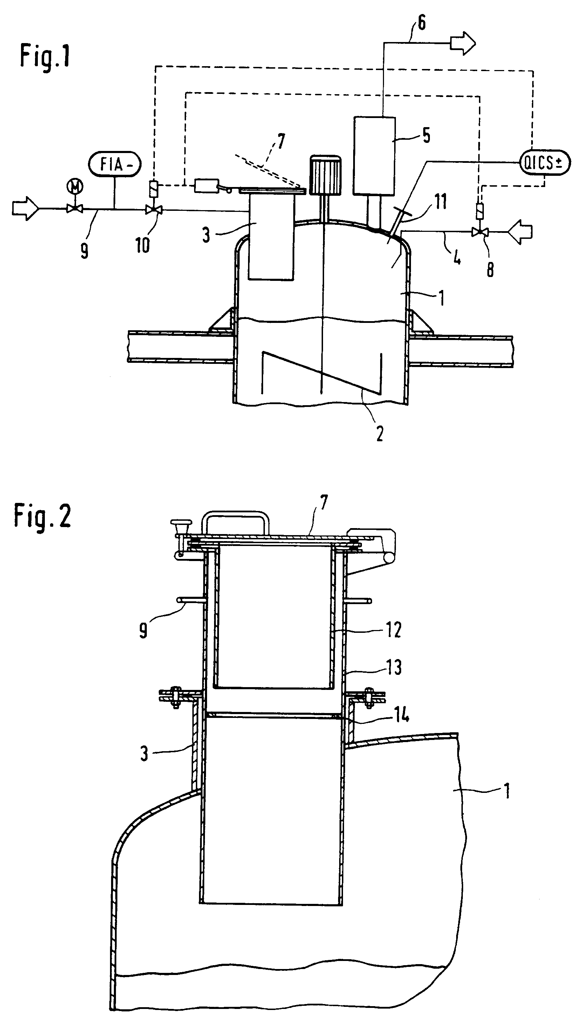

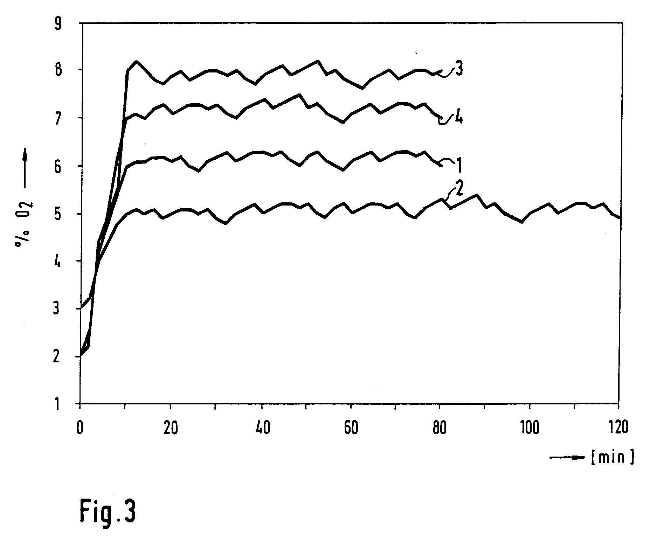

In Figur 1 ist ein Reaktor 1 mit Rührer 2 und eine Inertgasschleuse 3 dargestellt. Die Grundinertisierung erfolgt durch die Zufuhr von Stickstoff durch die Leitung 4. Das Kopfraumgas wird über die Reinigungsvorrichtung 5 durch die Leitung 6 abgezogen. Beim Öffnen des Reaktors durch Öffnen des Deckels 7 der Inertgasschleuse 3 wird die Stickstoffzufuhr durch die Leitung 4 mittels des Absperrventiles 8 eingestellt und durch eine Stickstoffzufuhr über die Leitung 9 und das Absperrventil 10 ersetzt. Am Reaktor ist ferner eine Lanze 11 angebracht, durch welche Analysengas entnommen werden kann, beispielsweise um die in Figur 3 dargestellten Meßergebnisse zu erhalten.

Die Inertgasschleuse 3 ist in Figur 2 vergrößert dargestellt. Sie besteht im wesentlichen aus zwei konzentrischen Rohren 12 und 13, in deren nach oben dichten Zwischenraum das Inertgas durch die Leitung 9 eingedüst wird. Das innere Rohr 12 ist kürzer als das äußere Rohr 13, so daß der Gasstrom die Möglichkeit hat, sich in radialer Richtung auszuweiten. Diese Ausweitung wird durch das Umlenkblech 14 unterstützt. Solche Inertgasschleusen sind Stand der Technik und beispielsweise aus DE 39 14 783 A1 bekannt.

Durch eine große Anzahl von Versuchen mit verschiedenen Ausführungsformen derartiger Inertgasschleusen wurde festgestellt, daß sich bei Einsatz einer solchen Vorrichtung für die Einbringung von Inertgas in der Nähe der Behälteröffnung immer ein bestimmter Endwert des Sauerstoffrestgehaltes im Behälter einstellt. Dieser Sauerstoffrestgehalt steigt auch bei beliebig langer Öffnungsdauer des Behälters nicht weiter an. Es kann somit ohne erhöhtes Risiko auf die meßtechnische Erfassung des Restsauerstoffgehaltes im Behälter verzichtet werden. Die nachfolgenden, in der Praxis gewonnen Beispiele erläutern die Möglichkeiten der Erfindung und zeigen die wichtigsten Einflußgrößen.
1. Ein Reaktor 1 von ca. 650 l Kopfraumvolumen ist gemäß Figur 1 mit einer Inertgasschleuse 3, einer Leitung 4 für die Zufuhr von Stickstoff zur Grundinertisierung, einer Leitung 6 zum Absaugen von Abgas und mit einer Lanze 11 für die Entnahme von Analysengas versehen. An die Inertisierungsschleuse 3 ist die Leitung 9 zur Zufuhr von Stickstoff bei geöffnetem Deckel 7 angeschlossen. Durch eine Zugabe von Stickstoff durch die Leitung 4 wird in Verbindung mit der Absaugung durch die Leitung 6 eine Grundinertisierung in dem geschlossenen Behälter 1 hergestellt. Durch das Öffnen des Deckels 7 erfolgt danach eine Stickstoffzufuhr durch die Leitung 9 anstelle von Leitung 4, wobei die variablen Gasflüsse in den Leitungen 6 und 9 gemessen werden. Die wichtigsten Meßwerte:

| | |
|---|---|
| O₂-Konzentration nach Grundinertisierung | = 2 % |
| N₂-Fluß in Leitung 9 | = 15 cbm/h |
| Absaugung durch Leitung 6 | = 10 cbm/h |
| Stickstoffreinheit | = 99,99 % |
| O₂-Konzentrationsendwert | = 6 % |

2. Obiger Behälter und Versuch mit folgenden Einstelldaten bzw. Meßwerten:

| | |
|---|---|
| O₂-Konzentration nach Grundinertisierung | = 2 % |
| N₂-Fluß in Leitung 9 | = 20 cbm/h |
| Absaugung durch Leitung 6 | = 10 cbm/h |
| Stickstoffreinheit | = 99,99 % |
| O₂-Konzentrationsendwert | = 5 % |

Eine Erhöhung des N₂-Flusses bewirkt hier eine nur geringfügige Verbesserung des O₂-Endwertes.
3. Obiger Behälter und Versuch mit folgenden Einstelldaten bzw. Meßwerten:

| | |
|---|---|
| O₂-Konzentration nach Grundinertisierung | = 2 % |
| N₂-Fluß in Leitung 9 | = 13 cbm/h |
| Absaugung durch Leitung 6 | = 15 cbm/h |
| Stickstoffreinheit | = 99,99 % |
| O₂-Konzentrationsendwert | = 8 % |

Ein konstanter Endwert der O₂-Konzentration wird auch dann erreicht, wenn der N₂-Zustrom kleiner ist als der Absaugstrom, der Behälter also durchaus eine gewisse Menge sauerstoffhaltiger Fremdluft zieht. Bei richtiger Auslegung von Absaugleistung und Inertgasstrom und insbesondere bei Unterschußzugabe von Inertgas erfolgt eine Zugabe von Schüttmaterial ohne negative Auswirkungen wie Staub- und Dämpfeverbreitung.
4. Obiger Behälter und Versuch mit folgenden Einstelldaten bzw. Meßwerten:

| | |
|---|---|
| O₂-Konzentration nach Grundinertisierung | = 3 % |
| N₂-Fluß in Leitung 9 | = 15 cbm/h |
| Absaugung durch Leitung 6 | = 10 cbm/h |
| Stickstoffreinheit | = 98 %, Rest O₂ |
| O₂-Konzentrationsendwert | = 7 % |

Auch die Nutzung von N₂ minderer Reinheit führt zu (vergleichbaren) konstanten Endwerten des Sauerstoffes.

Die Ergebnisse der vier Betriebsversuche sind in Figur 3 dargestellt, nämlich die O₂-Konzentrationsendwerte über der Dauer der Schleusenöffnung in Minuten. Es ist deutlich zu erkennen, daß der Anstieg der O₂-Konzentrationen schon nach weniger als 10 min aufhört und sich auf einem konstanten Wert einpendelt.

Produktionsfaktoren, die den Sauerstoffkonzentrationsendwert beeinflußen können, sind ohne Anspruch auf Vollständigkeit vor allem das Behältervolumen, der Durchmesser der Schleuse, die Temperatur im Reaktor und die im Reaktor befindlichen Stoffe.

Für die Anwendung des erfindungsgemäßen Verfahrens in der Praxis sind somit folgende Maßnahmen durchzuführen: Man installiert am Reaktor eine Inertgasschleuse mit regelbarer Inertgaszuführung und schafft eine definiert einstellbare Absaugleistung. Man variiert im Rahmen von Vorversuchen, die auch O₂-Messungen umfassen, Inertgas- und Absaugstrom (Kopfraumgasstrom) so, daß sich eine konstante Sauerstoff-Endkonzentration einstellt die unter dem geforderten Sauerstoffrestgehalt liegt. Aus Gründen der Wirtschaftlichkeit wird hierbei der Inertgasstrom möglichst klein gehalten. In Grenzfällen kann hierbei der Absaugstrom den Wert O einnehmen. Ist ein Dosierstrom des Inertgases gefunden, bei dem der Sauerstoffgrenzwert unterhalb des jeweils festgelegten maximal zulässigen Sauerstoffgehaltes verbleibt, sind als einzige und kostengünstige Überwachung die beiden eingestellten Gasströme zu messen. Auf die teure meß- und regeltechnische Erfassung des Restsauerstoffgehaltes im Reaktor kann verzichtet werden. Die gewonnenen Werte gelten dann nur für das jeweilige Inertgas, für die jeweilige Stoffproduktion und nur für den jeweiligen Behälter. Für andere Produktionen und andere Behälter gelten getrennt zu bestimmende Werte für Absaugstrom und Inertgasstrom.

## Patentansprüche

1. Verfahren zum Inertisieren von brennbare Substanzen enthaltenden, zumindest zeitweise geöffneten Reaktoren durch ein dem Reaktor (1) im geöffnetem Zustand über eine Inertgasschleuse (3) zugeführtes Inertgas, bei gleichzeitigem Abzug von Kopfraumgas,
dadurch gekennzeichnet,
daß unter Verzicht auf die meß- und regeltechnische Erfassung des Sauerstoffgehaltes im Reaktor ein bestimmter, für die jeweiligen Produktionsfaktoren spezifischer und vorab ermittelter Differenzwert zwischen Inertgasstrom und definiert abgezogenem Kopfraumgasstrom eingestellt und beibehalten wird.

2. Verfahren nach Anspruch 1,
dadurch gekennzeichnet,
daß das Inertgas simultan vor Ort erzeugt wird.

3. Verfahren nach Anspruch 2,
dadurch gekennzeichnet,
daß das Inertgas aus verdampftem flüssigem Stickstoff gewonnen wird, mit welchem gleichzeitig eine kryotechnische Reinigung des abgezogenen Kopfraumgases durchgeführt wird.

## Claims

1. Process for rendering inert reactors which contain flammable substances and are open at least temporarily by an inert gas fed to the reactor (1) in the open state via an inert gas lock (3), with simultaneous removal of headspace gas, characterized in that a certain difference between inert gas flowrate and headspace gas flowrate removed in a defined manner is established and maintained, dispensing with the instrumental determination of the oxygen content in the reactor, which difference is specific to the particular production factors and is determined in advance.

2. Process according to Claim 1, characterized in that the inert gas is generated simultaneously on site.

3. Process according to Claim 2, characterized in that the inert gas is obtained from vapourized liquid nitrogen with which is carried out at the same time a cryogenic purification of the headspace gas removed.

## Revendications

1. Procédé d'inertisation de réacteurs contenant des substances combustibles, ouverts au moins par moments, au moyen d'un gaz inerte amené au réacteur (1) à l'état ouvert par l'intermédiaire d'un sas à gaz inerte (3), avec extraction simultanée du gaz d'enceinte de tête,
caractérisé en ce qu'
en renonçant à la détection faisant appel à une technique de mesure et de régulation de la teneur en oxygène dans le réacteur, on peut régler et conserver une valeur différentielle, spécifique aux facteurs de production respectifs et déterminée préalablement, entre le flux du gaz inerte et le flux de gaz d'enceinte de tête ayant été extrait de façon définie.

2. Procédé selon la revendication 1,
caractérisé en ce que
le gaz inerte est simultanément généré sur site.

3. Procédé selon la revendication 2,
caractérisé en ce que
le gaz inerte est obtenu à partir d'azote liquide évaporé, à l'aide duquel simultanément on effectue un nettoyage cryotechnique du gaz d'enceinte de tête ayant été extrait.
